# EUROPÄISCHE PATENTANMELDUNG

(11) **EP 3 736 173 A1**
(43) Veröffentlichungstag der Anmeldung: **11.11.2020**
(21) Anmeldenummer: 20173693.1
(22) Anmeldetag: 08.05.2020
(51) Int. Cl.: B60R 9/045, B60R 15/00, B60R 9/042

(54) **VERSORGUNGSMODUL**

(30) Priorität: 09.05.2019 DE 202019102618 U
(71) Anmelder: Mindfly GmbH, 48145 Münster (DE)
(72) Erfinder: Ronge, Peter, 48145 Münster (DE)
(74) Vertreter: Habbel, Ludwig

(57) **Zusammenfassung**

Die Erfindung schlägt ein Camping-Versorgungsmodul (8) vor,
• mit einer Basis (5),
welche die Befestigung des Versorgungsmoduls (8) auf einem Dachgepäckträger eines Automobils ermöglichend ausgestaltete Befestigungsmittel aufweist,
• mit einem Wassertank (10),
welcher einen Dosierverschluss zur dosierbaren Abgabe des Wassers aus dem Wassertank (10) aufweist,
und welcher einen Füllanschluss zum Befüllen des Wassertanks (10) aufweist,
• und mit einem Funktionselement (11),
welches eine Kochstelle aufweist,
und welches an der Basis (5) beweglich gehalten ist,
derart, dass das Funktionselement (11) zwischen einer ersten Transportstellung und einer zweiten, vergleichsweise tiefer angeordneten Gebrauchsstellung schwenkbeweglich ist, wobei das Funktionselement (11) in seiner Transportstellung oberhalb von der Basis (5) angeordnet ist und in seiner Gebrauchsstellung sich zumindest teilweise über die Grundfläche der Basis (5) hinaus erstreckt.

## Beschreibung

Die Erfindung betrifft ein Versorgungsmodul, welches zum Camping genutzt werden kann.

Aus der Praxis sind spezialisierte Campingfahrzeuge bekannt, die einen fest installierten Innenausbau aufweisen, so dass das gesamte Fahrzeug vordringlich zur Nutzung im Rahmen des Campings bestimmt ist. Weiterhin ist es aber auch bekannt, Fahrzeuge, die je nach Größe und Ausgestaltung als Kleintransporter, Minivans oder Kastenwagen bezeichnet werden, lediglich zeitweise und bedarfsweise zu Campingfahrzeugen umzurüsten. Hierfür sind Versorgungsmodule bekannt, die nicht in Art eines festen Innenausbaus dauerhaft im Fahrzeug fixiert werden. Vielmehr sind diese für das Camping bestimmten Innenausbauten modulartig ausgestaltet, so dass die Module bei Bedarf aus dem Fahrzeug entnommen werden können und der Kleintransporter, Minivan oder Kastenwagen anschließend wieder in seiner vorherigen Ausgestaltung bereitsteht, die für andere Verwendungszwecke wie beispielsweise den Personen- oder Materialtransport besser geeignet ist.

Die dazu verwendeten, bekannten Module sind jeweils an ein bestimmtes Fahrzeugmodell eines bestimmten Fahrzeugherstellers angepasst und nehmen einen erheblichen Anteil des Raumes im Inneren des Fahrzeugs ein, typischerweise im hinteren Bereich des Innenraums, hinter der ersten Sitzreihe, welche den Fahrer- und den Beifahrersitz aufweist. Beispielsweise können die bekannten Module an die Innenkontur der Fahrzeugkarosserie angepasst sein, um bündig an eine Innenverkleidung der Karosserie anzuschließen. Oder sie können an bestimmte Befestigungsmöglichkeiten des Fahrzeugs angepasst sein, z. B. an ein bestimmtes Schienensystem, das in dem Fahrzeug zur Ladungssicherung vorgesehen ist.

Der Erfindung liegt die Aufgabe zugrunde, ein Versorgungsmodul anzugeben, welches mit einer Vielzahl unterschiedlicher Fahrzeuge verwendbar ist und wirtschaftlich herstellbar ist.

Diese Aufgabe wird durch ein Versorgungsmodul mit den Merkmalen des Anspruchs 1 gelöst. Vorteilhafte Ausgestaltungen sind in den Unteransprüchen beschrieben.

Die Erfindung schlägt mit anderen Worten vor, das Versorgungsmodul nicht im Inneren des Fahrzeugs unterzubringen, sondern vielmehr auf dem Fahrzeugdach. Hierdurch können nicht nur unterschiedliche Fahrzeugmodelle desselben oder auch verschiedener Fahrzeughersteller, sondern auch überraschend viele unterschiedliche Fahrzeug-Grundtypen als Campingfahrzeuge genutzt werden, wenn das Versorgungsmodul als Campingmodul ausgestaltet ist. Als Fahrzeug-Grundtypen werden in diesem Zusammenhang grundsätzlich unterschiedliche Fahrzeug-Bauformen bezeichnet, wie Limousine, Coupe, Kombi, SUV, Transporter bzw. Kleintransporter, Kleinbusse und dergleichen. Im Unterschied zu den Fahrzeug-Grundtypen werden als Fahrzeugtypen bzw. Fahrzeugmodelle unterschiedliche Fahrzeuge bezeichnet, von demselben Hersteller oder auch von verschiedenen Herstellern, selbst wenn sie zu demselben Fahrzeug-Grundtyp gehören.

Für kürzere Ausflüge wie beispielsweise Tages- oder Wochenendausflüge können Fahrzeuge genutzt werden, die lediglich genug Sitzraum für die Passagiere bieten. So kann beispielsweise nach einem Badetag mithilfe eines Wasservorrats des Versorgungsmoduls geduscht werden, und es kann mithilfe einer Kochstelle des Versorgungsmoduls eine Mahlzeit zubereitet werden. Und falls Übernachtungen geplant sind, kann hierfür im Kofferraum oder auf dem Dachgepäckträger auch solcher Fahrzeuge, die lediglich genug Sitzraum für die Passagiere bieten, ein Zelt mitgeführt werden. Überraschend hat sich zudem herausgestellt, dass in vielen Fällen sogar PKWs oder Coupes als provisorisches Campingfahrzeug mit Übernachtungsmöglichkeit genutzt werden können, wenn sie beispielsweise eine klappbare Rückbanklehne aufweisen und auf diese Weise eine große nutzbare Innenlänge ermöglichen.

Fahrzeuge mit noch größeren Innenräumen wie beispielsweise Kombis oder SUVs, Minivans, Kastenwagen und dergleichen weisen häufig eine Ladefläche auf, die als Liegefläche genutzt werden kann. Diese Fahrzeuge können aufgrund ihrer nutzbaren Innenlänge zumindest für ein bis zwei Personen eine witterungsgeschützte Übernachtung im Fahrzeug ermöglichen, so dass auch ein längerer Campingurlaub mit einem derartigen Fahrzeug möglich ist, da der Innenraum hierfür nutzbar ist. Die für das Camping vorgesehenen Utensilien, die im Versorgungsmodul zusammengefasst sind, werden nämlich vorschlagsgemäß außerhalb des Innenraums auf dem Dach des Fahrzeugs untergebracht. Ein erster großer Vorteil des vorschlagsgemäßen Versorgungsmoduls liegt daher darin, dass die Montage des Versorgungsmoduls nicht im Innenraum, sondern auf dem Dach des Fahrzeugs vorgesehen ist.

Ein zweiter großer Vorteil des vorschlagsgemäßen Versorgungsmoduls besteht darin, dass das Versorgungsmodul von seiner angehobenen Transportstellung, in der es sich auf dem Dach des Fahrzeugs befindet, in seine abgesenkte Gebrauchsstellung verbracht werden kann, ohne dabei den Untergrund zu berühren, auf dem das Fahrzeug steht. Dementsprechend ist es beispielsweise nicht erforderlich, einen Tisch aufzubauen, um die Gegenstände in Benutzung zu nehmen, die im Versorgungsmodul untergebracht sind. Beim Camping ist es beispielsweise üblich, das Fahrzeug möglichst horizontal zu nivellieren, da dies beispielsweise aufgrund der dementsprechend horizontal nivellierten Liegefläche zum Schlafen vorteilhaft ist. Dementsprechend ist auch eine durch das Versorgungsmodul bereitgestellte Kochstelle gebrauchsfertig horizontal nivelliert, wenn sie aus ihrer Transportstellung in die Gebrauchsstellung abgesenkt worden ist.

Die Verwendung des Versorgungsmoduls ist nicht auf den Anwendungsbereich des Campings als Freizeitvergnügen beschränkt. Wenn beispielsweise Helfer in Überflutungsregionen eingesetzt werden, kann mittels eines vorschlagsgemäßen Versorgungsmoduls eine Versorgung der Helfer sowie der Bevölkerung mit Trinkwasser sowie mit gekochten Mahlzeiten ermöglicht werden. Dazu sind dann keine speziellen Fahrzeuge wie die so genannten "Gulaschkanonen" der Hilfsorganisationen erforderlich, sondern vorschlagsgemäße Versorgungsmodule können platzsparend, nämlich ohne das zugehörige Fahrzeug, in das Einsatzgebiet verbracht werden und dort auf vorhandenen - gegebenenfalls sogar auf privaten - Fahrzeugen montiert zum Einsatzort verbracht werden, mit denen beispielsweise auch die Helfer zum Einsatzort gelangen.

Bei den vorbeschriebenen Fahrzeug-Grundtypen, insbesondere den kleineren Fahrzeug-Grundtypen wie Limousinen oder Coupes ist im Innenraum häufig nicht genug Platz vorhanden, um einen typischen Campingausbau dauerhaft oder auch herausnehmbar im Fahrzeug zu installieren. Die vorschlagsgemäß vorgesehene Dachmontage hingegen ermöglicht auch bei diesen Fahrzeug-Grundtypen die Verwendung eines Versorgungsmoduls und somit die Nutzung eines solchen Fahrzeugs als - zumindest provisorisches - Campingfahrzeug. Und bei Fahrzeug-Grundtypen, die aufgrund ihres Platzangebots ohnehin als Campingfahrzeug geeignet sind, wie z.B. Kleintransporter oder Kleinbusse, ermöglicht das vorschlagsgemäße Versorgungsmodul die ungehinderte Nutzung des gesamten Innenraums, z.B. für die Beförderung möglichst vieler Personen.

Durch die Montage auf einem Dachgepäckträger, zum Beispiel auf den Grundträgern eines Dachträgersystems, muss das Versorgungsmodul nicht an bestimmte Fahrzeugtypen angepasst sein, wie dies bei einem Innenausbau erforderlich wäre. Daher kann das Versorgungsmodul erstens in vergleichsweise großen Stückzahlen und damit entsprechend wirtschaftlich hergestellt werden, und zweitens bietet es dem jeweiligen Benutzer die Möglichkeit, auch nach einem Fahrzeugwechsel das Versorgungsmodul problemlos weiterhin benutzen zu können, ohne eine Neuanschaffung zu erfordern.

Zur Montage des Versorgungsmoduls auf einem Dachgepäckträger weist das Versorgungsmodul vorschlagsgemäß eine Basis auf. Es kann sich bei der Basis um ein Gestell aus mehreren Streben handeln, oder auch um eine Platte, auf welcher andere Komponenten des Versorgungsmoduls angeordnet sind. Ggf. kann sich an die Basis ein Gehäuse anschließen, welches eine oder mehrere Komponenten des Versorgungsmoduls als Witterungsschutz umgibt.

Die Montage der Basis auf einem Dachgepäckträger eines Automobils kann konstruktiv grundsätzlich auf die gleiche Weise gelöst werden, wie dies von den aus der Praxis bekannten Dachboxen bekannt ist, so dass diese Befestigungstechnik dem Fachmann bestens bekannt ist und auf ihre Ausgestaltung an dieser Stelle nicht näher eingegangen zu werden braucht. Beispielsweise kann die Basis, die auf Grundträgern eines Dachträgersystems aufliegt, mithilfe U-förmiger Bügel befestigt werden, welche jeweils von der Basis nach unten ragen und jeweils einen Grundträger umgreifen.

Anders als ein auf dem Dach mitgeführter Wasserkanister, der einen einzigen Stutzen sowohl für die Befüllung als auch zur Entleerung des Wasserkanisters aufweist, weist der vorschlagsgemäß als Teil des Versorgungsmoduls vorgesehene Wassertank auch einen Dosierverschluss auf. Der Dosierverschluss ermöglicht eine kontrollierte, dosierte Entnahme des Wassers aus dem Wassertank und somit eine sparsame Verwendung des im Wassertank mitgeführten Wasservorrats.

Der Dosierverschluss kann beispielsweise in Form eines Wasserhahns ausgestaltet sein. Wenn beispielsweise der Wassertank mit einer Spüle verbunden ist, kann sich der Wasserhahn an dieser Spüle befinden. Der Dosierverschluss kann sich jedoch auch am Wassertank selbst befinden, so dass unabhängig von der Verwendung des Wassers die Dosierung der Wassermenge stets am Wassertank erfolgt. Um das Wasser zum Duschen verwenden zu können, kann ein an den Wassertank angeschlossener Schlauch vorgesehen sein, an dessen anderem Ende ein Brausekopf angeordnet ist. Dieser Brausekopf kann nicht nur zur Aufteilung des Wasserstrahls in mehrere kleinere Strahlen dienen, sondern gleichzeitig auch als Dosierverschluss dienen, indem unmittelbar am Brausekopf selbst die ausströmende Wassermenge reguliert werden kann.

Weiterhin ist vorschlagsgemäß vorgesehen, dass das Versorgungsmodul ein so genanntes Funktionselement aufweist, welches eine Kochstelle aufweist. Um dieses Funktionselement problemlos nutzen und die darin enthaltene Kochstelle problemlos bedienen zu können, ist das Funktionselement beweglich an der Basis gehalten. Diese Bewegung kann beispielsweise entlang einer Führungsschiene erfolgen oder mittels einer Gelenkanordnung. Beispielsweise kann eine Schwenkbewegung vorgesehen sein, die um eine einzige Schwenkachse ausgeführt wird, oder es kann eine Bewegung in Art einer Doppelfaltung um mehrere Schwenkachsen vorgesehen sein, um beispielsweise einen besonders großen Höhenunterschied überbrücken zu können. Nachfolgend wird häufig eine Schwenkbewegung ein beispielhaft und stellvertretend für andere Möglichkeiten eines Bewegungsablauf erwähnt.

In einer sogenannten Transportstellung befindet sich das Funktionselement oberhalb von der Basis, indem es beispielsweise auf der Basis aufliegt. Aus dieser Transportstellung kann das Funktionselement in eine sogenannte Gebrauchsstellung geschwenkt werden, in der es sich einerseits in einer niedrigeren Höhe befindet als in der Transportstellung, und in der es außerdem teilweise oder vollständig über die Grundfläche der Basis hinausragt. Durch diese Schwenkbeweglichkeit kann das Funktionselement aus der Transportstellung auf dem Autodach, wo sich je nach Fahrzeugmodell beispielsweise in Brust- oder Kopfhöhe oder noch höher befindet, in die niedrigere Gebrauchsstellung verbracht werden, in welcher es sich beispielsweise in Bauch- oder Hüfthöhe befindet.

Zusätzlich zu der Schwenkbeweglichkeit kann eine Beweglichkeit des Funktionselements zur Höhenverstellung vorgesehen sein, beispielsweise in Form von Teleskopschienen. Das in seine Gebrauchsstellung geschwenkte Funktionselement kann mittels der Höhenverstellung anschließend zusätzlich zu der Schwenkbewegung noch weiter abgesenkt werden, um das in eine bequem zugängliche und gut bedienbare Höhe zu bringen. Durch eine derartige Höhenanpassung kann dasselbe Versorgungsmodul einerseits problemlos auf unterschiedlich hohen Fahrzeugen verwendet werden, und andererseits eine optimale, individuelle Anpassung an unterschiedliche Benutzer ermöglichen.

Die Schwenkbewegung des Funktionselements kann dabei in praktisch jeder beliebigen Richtung vorgesehen sein. Für unterschiedliche Fahrzeug-Grundtypen können unterschiedliche Schwenkrichtungen infrage kommen, so dass ggf. unterschiedlich ausgestaltete Versorgungsmodule genutzt werden können:
Beispielsweise kann das Funktionselement in eine Gebrauchsstellung seitlich neben das Fahrzeug verbracht werden, wobei ein derart ausgestaltetes Versorgungsmodul für nahezu sämtliche Fahrzeug-Grundtypen und nahezu sämtliche Fahrzeugmodelle verwendbar ist. Durch die Anordnung seitlich neben dem Fahrzeug ist das Funktionselement während des Gebrauchs problemlos zugänglich und bedienbar. Je nach Ausrichtung des Versorgungsmoduls auf dem Fahrzeugdach kann zudem gewählt werden, ob das Funktionselement auf die rechte oder auf die linke Fahrzeugseite geschwenkt werden soll, so dass dementsprechend bestimmt werden kann, welche Fahrzeugtüren nach wie vor zugänglich sind, wenn sich das Funktionselement in seiner Gebrauchsstellung befindet.

Für Fahrzeuge mit einem steilen Fahrzeugheck wie z.B. Kombis, Kleinbusse, Transporter oder SUVs kann ein Versorgungsmodul genutzt werden, bei welchem das Funktionselement in eine Gebrauchsstellung hinter dem Fahrzeug verbracht werden kann. So können seitliche Fahrzeugtüren nach wie vor genutzt werden, wenn sich das Funktionselement in seiner Gebrauchsstellung befindet. Bei Fahrzeugen mit steiler Frontscheibe und einer kurzen Fahrzeugfront vor der Frontscheibe, wie dies z.B. von einigen Kleinbussen und Transportern bekannt ist, kann vorgesehen sein, das Funktionselement in eine Gebrauchsstellung vor dem Fahrzeug oder zumindest vor der Windschutzscheibe zu verbringen. Ggf. kann dies auch dadurch erreicht werden, dass dasselbe Versorgungsmodul um 180° gedreht montiert wird, dessen Funktionselement ansonsten hinter dem Fahrzeugheck seine Gebrauchsstellung einnehmen würde.

Vorteilhaft kann das Funktionselement eine Spüle aufweisen, so dass zusammen mit der Kochstelle die komplette Funktionalität einer Außenküche bereitgestellt werden kann.

Vorteilhaft kann vorgesehen sein, den Wassertank vor Fahrtantritt zu leeren, so das einerseits das Fahrzeuggewicht nicht durch die mitgeführte Wassermenge erhöht wird und andererseits der Fahrzeugschwerpunkt nicht unerwünscht weit nach oben verlagert wird. Es können jedoch Fälle eintreten, in denen die Entleerung des Wassertanks vergessen wurde oder es erforderlich ist, das Wasser im Wassertank zur Campingstelle mitzuführen. Daher kann vorteilhaft der Wassertank im Inneren mit Schwallblechen, Foliensäcken, einer Schaumstruktur oder dergleichen versehen sein, um unkontrollierte Bewegungen des Wassers während der Fahrt zu verhindern und ein möglichst sicheres Fahrverhalten des Fahrzeugs zu unterstützen, auf welchem das Versorgungsmodul montiert ist.

Der Betrieb der Kochstelle kann vorzugsweise mit Gas erfolgen, so dass keine elektrische Versorgung mit hoher elektrischer Leistung bereitgestellt zu werden braucht. In diesem Zusammenhang kann das vorschlagsgemäße Versorgungsmodul, insbesondere beispielsweise dessen Funktionselement, vorteilhaft eine Halterung für eine Gaskartusche aufweisen, so dass die Gaskartusche bei Nichtgebrauch der Kochstelle nicht im Fahrzeuginneren mitgeführt zu werden braucht. Gefahren, die ansonsten im Fahrzeuginneren durch Leckagen und durch austretendes Gas auftreten könnten, werden auf diese Weise zuverlässig vermieden. Da die Halterung die Gaskartusche dementsprechend nicht während der Benutzung der Kochstelle aufnimmt, sondern beispielsweise während der Fahrt, kann sie auch als Transporthalterung bezeichnet werden.

Im Sinne eines möglichst hohen Sicherheitsstandards kann dabei vorteilhaft vorgesehen sein, dass die Gaskartusche während des Nichtgebrauchs der Kochstelle nicht mit der Kochstelle verbunden bleibt. Die Transporthalterung für die Gaskartusche kann daher vorteilhaft so ausgestaltet bzw. angeordnet sein, dass die Gaskartusche nur dann in die Halterung eingebracht werden kann, wenn die Gaskartusche von der Kochstelle getrennt ist. Da die Gaskartusche in diesem getrennten Zustand zuverlässig verschlossen ist, wird die Gefahr potentieller Leckagen durch undichte Anschlüsse, Leitungen oder dergleichen vermieden.

Vorteilhaft kann der dem Wassertank zugeordnete Dosierverschluss an einem Schlauch angeordnet sein, welcher an den Wassertank anschließt. Dies betrifft einerseits die Möglichkeit, den Dosierverschluss als Wasserhahn an der erwähnten Spüle auszugestalten, und diesen Wasserhahn über eine Schlauchleitung mit dem Wassertank zu verbinden. Dies betrifft andererseits jedoch auch die Möglichkeit, einen an den Wassertank angeschlossenen und ansonsten frei beweglichen Schlauch zu verwenden, so dass mittels dieses Schlauchs entweder Wasser in die Spüle geleitet werden kann oder zum Duschen genutzt werden kann. An der Spüle kann vorteilhaft ein Halter vorgesehen sein, in den der Schlauch bzw. seine Austrittsdüse eingehängt werden kann, so dass eine Funktion ähnlich wie bei einem fest installierten Wasserhahn gegeben ist und der Benutzer beide Hände frei hat. Insbesondere wenn am Ende des Schlauchs eine Austrittsdüse vorgesehen ist, die das austretende Wasser in mehrere einzelne Strahlen aufteilt, kann diese Austrittsdüse sowohl für die Küchenarbeit an der Spüle als auch als Brausekopf zum Duschen genutzt werden.

Je nach Fassungsvermögen des Wassertanks kann es vorteilhaft sein, dass der Wassertank unbeweglich mit der Basis verbunden ist, also an der Basis festgelegt ist. Eine Handhabung und insbesondere Bewegung des Wassertanks ist auf diese Weise nicht erforderlich, außer während der Montage bzw. Demontage des Versorgungsmoduls am Fahrzeug, und für diese Zwecke kann der Wassertank zugunsten einer möglichst einfachen Handhabung und eines möglichst geringen Gewichts geleert werden.

Alternativ dazu kann es jedoch auch vorteilhaft sein, dass der Wassertank wie das Funktionselement ebenfalls schwenkbeweglich mit der Basis verbunden ist. Im Falle des Wassertanks wird jedoch - anders als bei dem Funktionselement - dessen angehobene Stellung auf der Basis als Gebrauchsstellung bezeichnet, während die demgegenüber tiefer angeordnete, nach unten geschwenkte Stellung des Wassertanks als Befüllstellung bezeichnet ist, in welcher ein besonders bequemer und einfacher Zugang zum Füllanschluss möglich ist. Die Beweglichkeit - z.B. mittelst einer Schwenklagerung - des Wassertanks ist dabei vorzugsweise unabhängig von der Schwenklagerung des Funktionselementes ausgeführt, so dass der Wassertank nicht stets gemeinsam mit dem Funktionselement bewegt werden muss, sondern lediglich dann, wenn er befüllt werden soll. Insbesondere kann durch diese Unabhängigkeit der beiden Schwenklagerungen voneinander vorgesehen sein, den Wassertank in eine andere Richtung zu schwenken als das Funktionselement.

Ohnehin kann das Versorgungsmodul insofern zweigeteilt aufgebaut sein, als sein Funktionselement unabhängig von dem Wassertank aus seiner oberen Transport- bzw. Ruhestellung in seine untere Gebrauchsstellung beweglich ist. Selbst wenn der Wassertank stets ortsfest verbleiben sollte und nicht schwenkbar bzw. höhenbeweglich gelagert ist, ist die erwähnte Zweiteilung vorteilhaft, weil beispielsweise das Funktionselement hinter dem Wassertank auf dem Fahrzeugdach angeordnet werden kann und insofern Benutzung der vorderen Tür des Fahrzeugs nach wie vor auch dann möglich ist, wenn sich das Funktionselement in seiner abgesenkten Gebrauchsstellung seitlich neben dem Fahrzeug befindet, und zwar hinter den Türen - bzw. zumindest den vorderen Türen - des Fahrzeugs.
Wenn der Wassertank schwenkbar gelagert ist, kann das Anheben des gefüllten Wassertanks aus seiner Befüllstellung in seine Gebrauchsstellung vorteilhaft kraftunterstützt erfolgen. Beispielsweise kann eine mechanische Feder oder eine Gasdruckfeder als Kraftspeicher verwendet werden, so dass der Wassertank zum Befüllen gegen die Wirkung einer Rückstellkraft der jeweiligen Feder nach unten geschwenkt werden kann. Durch die Federkraft unterstützt, kann der Wassertank anschließend im gefüllten Zustand nach oben in seine Gebrauchsstellung geschwenkt werden.

Alternativ oder auch ergänzend zu dieser kraftunterstützten Schwenkbeweglichkeit des Wassertanks kann vorgesehen sein, dass der Wassertank motorisch angetrieben schwenkbar ist, beispielsweise durch einen Elektromotor oder eine elektrohydraulische Antriebsanordnung. Auf diese Weise sind für den Benutzer praktisch ohne nennenswerten Einsatz von eigenen Körperkräften die Bewegungen des Wassertanks möglich, so dass eine besonders sichere und kontrollierte Handhabung des Wassertanks gewährleistet werden kann.

In den meisten Fällen ist die Verwendung von warmem Wasser vorteilhaft, sei es zum Spülen oder zum Duschen. Eine ressourcenschonende Erwärmung oder zumindest Vorwärmung des Wassers kann durch eine solare Erwärmung des Wassertanks ermöglicht werden. Hierzu kann der Wassertank vorteilhaft eine Wärmestrahlen absorbierende Beschichtung aufweisen, beispielsweise in Form einer schwarzen Lackierung. Oder der Wassertank kann in Form eines Foliensackes aus dunkler, z.B. schwarzer, Folie oder in Form mehrerer miteinander verbundener dunkler Foliensäcke ausgestaltet sein, wobei die Aufteilung des Tankvolumens auf mehrere Foliensäcke einen Schwallschutz bietet, ähnlich wie die Anordnung von Schwallblechen in einem festen Tankgehäuse. Zur Erzielung noch höherer Wassertemperaturen kann eine transparente Abdeckung bzw. ein transparentes Gehäuse außerhalb des eigentlichen Wassertanks vorgesehen sein, so dass der Wassertank einerseits solare Strahlung aufnehmen kann und andererseits vor einer Auskühlung z.B. durch Wind geschützt ist

Zugunsten einer wirtschaftlich vorteilhaften und konstruktiv möglichst einfachen Ausgestaltung, die zudem mit möglichst wenig Gelenksstellen auskommt und daher möglichst "klapperfrei" ausgeführt werden kann, kann vorgesehen sein, das jeweils zu schwenkende Bauteil wie den Wassertank oder das Funktionselement unter Veränderung seiner jeweiligen Ausrichtung um eine einzige Scharnierachse zu schwenken. Eine Spüle bzw. Kochstelle des Funktionselements, deren Ausrichtung in ihrer Gebrauchsstellung als horizontal bezeichnet wird, kann dementsprechend aus dieser horizontalen Ausrichtung der Gebrauchsstellung in eine im wesentlichen vertikale Ausrichtung geschwenkt werden, in welcher sich das Funktionselement in seiner Transportstellung befindet. Vergleichbares gilt für den Wassertank, für den es ohnehin grundsätzlich nicht relevant ist, welche Ausrichtung er einnimmt, wenn er sich in seiner Gebrauchsstellung befindet.

Um eine bestimmte Ausrichtung des Wassertanks und / oder des Funktionselements zu gewährleisten, kann jedoch alternativ vorgesehen sein, dass eine oder beide dieser schwenkbaren Komponenten des Versorgungsmoduls über einen Parallelogrammbeschlag schwenkbeweglich mit der Basis verbunden sind. Auf diese Weise behält die jeweilige Komponente ihre Ausrichtung stets bei, während sie sich entlang einer Bahnkurve zwischen Befüllstellung und der Gebrauchsstellung des Wassertanks bzw. zwischen der Gebrauchsstellung und der Transportstellung des Funktionselements bewegt.

Wenn das Funktionselement aus seiner Ruhestellung bzw. Transportstellung oberhalb des Fahrzeugdaches nach unten in seine Gebrauchsstellung bewegt worden ist, kann vorteilhaft vorgesehen sein, das Funktionselement abzustützen, so dass z.B. eine Küchenzeile eine möglichst stabile Lage einnimmt und bei einer Belastung von oben, z.B. bei einem Druck auf die Arbeitsplatte der Küchenzeile, dieser Belastung nicht teilweise durch eine eigene Bewegung der Küchenzeile nachgibt.

In einer ersten Ausgestaltung kann das Funktionselement am Boden abgestützt werden, auf dem auch das Fahrzeug steht. Beispielsweise kann eine teleskopierbar oder nach unten ausfahrbare Stütze vorgesehen sein, die vom Funktionselement nach unten bis auf den Boden geführt und dann in dieser Stellung verriegelt wird, so dass anschließend das Funktionselement entsprechend stabil abgestützt ist.

In einer zweiten Ausgestaltung kann das Funktionselement am Fahrzeug abgestützt werden. Um Schäden an der Karosserie des Fahrzeugs zu vermeiden, sind unterschiedliche Maßnahmen möglich:
- Das Funktionselement kann sich über eine Stütze auf einem Rad des Fahrzeugs abstützen, beispielsweise mittels eines Stützenfußes die am unteren Ende der Stütze, der als Klaue ausgestaltet ist, welche das Rad teilweise umfasst oder in Öffnungen der Felge des Rades eingreift.
- Das Funktionselement kann über eine Stütze an dem unteren Karosseriebereich des Fahrzeugs abgestützt sein, beispielsweise an einen sogenannten "Schweller", der jeweils an der Fahrzeugseite zwischen den beiden Radausschnitten und unterhalb des Türausschnitts verläuft. Abgesehen davon dass derartige Schweller üblicherweise stabiler, insbesondere gegenüber einem von außen einwirkenden Druck, ausgestaltet sind als die Karosseriehaut der Türen oder der Karosserieseitenflächen, sind die Schweller häufig auch optisch weniger hochwertig ausgestaltet als die erwähnte Karosseriehaut, indem beispielsweise die Schweller außen mit Unterbodenschutz oder einer ähnlichen Schutzschicht versehen sind und daher vergleichsweise unempfindlicher gegenüber Druckstellen, Kratzern oder ähnlichen optischen Beeinträchtigungen sind.
- Auch oberhalb der Schweller kann das Funktionselement entweder direkt oder mittelbar, nämlich über eine Stütze, an der Fahrzeugkarosserie abgestützt sein. Insbesondere auf Höhe der Fenster stellen die sogenannten A-, B- oder C-Säulen Bereiche dar, die im Vergleich zur erwähnten Karosseriehaut eine höhere Stabilität und Druckbelastbarkeit aufweisen.
- Zum Schutz der Karosserie kann ein Lappen vorgesehen sein, der aus einem textilen Werkstoff oder aus einem Elastomerwerkstoff bestehen kann. Bei entsprechend geringer Materialstärke kann ein derartiger Schutzlappen beispielsweise zwischen der Tür und der umgebenden Karosserie eingeklemmt werden, so dass er nicht versehentlich herabfallen kann, z.B. auf einen sandigen Boden, was seine Schutzwirkung beeinträchtigen könnte, oder nach dem Herabfallen durch Windeinwirkung verloren gehen kann.
- An Stelle des Lappens kann ein flaches, formstabiles Formteil vorgesehen sein, beispielsweise aus Blech oder aus einem ggf. mit Fasern verstärkten Kunststoff. Das Formteil kann als Winkelblech L- oder Z-förmig oder treppenstufenartig ausgestaltet sein, so dass es ebenfalls, ähnlich wie der erwähnte Lappen, zwischen einer zunächst geöffneten Tür bzw. einem geöffneten Fenster und der umgebenden Karosserie angeordnet und durch das Schließen der Tür bzw. des Fensters festgelegt werden kann. Das Formteil verteilt die Stützkräfte auf eine größere Fläche und verhindert auf diese Weise unerwünschte Verformungen der Karosserie. Außerdem werden dadurch, dass das Formteil mittels der Tür oder des Fensters festgelegt ist, Relativbewegungen zwischen dem Formteil und der Karosserie verhindert, die zu Scheuerstellen an der Karosserie führen könnten. Zwischen dem Formteil und der Karosserie kann eine Schutzfolie oder ein Schutzlappen angeordnet sein, oder das Formteil kann auf seiner der Karosserie zugewandten Seite mit einer elastischen oder textilen Schutzschicht versehen sein.

Unabhängig davon, wo sich die Stütze abstützt, kann sie jedenfalls einen Stützenfuß aufweisen, der im Vergleich zur Querschnittsfläche der Stütze großflächiger ausgestaltet ist, so dass er zur Erzielung möglichst geringer Flächenpressung die Stützkräfte auf eine größere Fläche verteilt. Dadurch kann die Belastung des betroffenen Fahrzeugteils verringert werden oder das Einsinken der Stütze in den Boden vermieden werden.

Die Stütze bzw. der Stützenfuß bzw. das erwähnte Formteil kann eine zugfeste Verbindung mit dem Funktionselement ermöglichen, so dass das Funktionselement nicht nur gegen Druckkräfte abgestützt, sondern auch gegen Zugkräfte gesichert ist, die es von der Fahrzeugkarosserie zu entfernen bestrebt sind.

Abgesehen von der Möglichkeit, das Funktionselement in seiner Gebrauchsstellung abzustützen und so zu stabilisieren, kann eine stabile Lage des Funktionselements in seiner Gebrauchsstellung auch vollständig ohne irgendeine Abstützung erreicht werden, beispielsweise durch einen Gelenkbeschlag mit einem ausgesteiften und trotzdem leichten Tragrahmen für das Funktionselement, wobei die Position des Gelenkbeschlags in seiner abgesenkten Gebrauchsstellung - also im Zustand "kochen" - durch sehr steife Gelenkstücke festgelegt ist, deren Gelenkbeweglichkeit in einer Endlage begrenzt ist. Somit schwebt die Küche frei neben dem Fahrzeug und ermöglicht eine hohe Belastbarkeit. In gleicher Weise kann auch der Wassertank mittels eines derartigen Gelenkbeschlags in seiner abgesenkten Füllstellung ohne Stützen gehalten werden.

Das Camping-Versorgungsmodul kann vorzugsweise eine geringe Aufbauhöhe aufweisen, um beispielsweise noch unterhalb eines Dachgepäckträgers angeordnet werden zu können. Beispielsweise kann eine Küchenarbeitsplatte vorgesehen sein, deren Materialstärke so groß bemessen ist, dass ein Kochfeld bündig in diese Küchenarbeitsplatte eingelassen ist. Auch ein Spülbecken kann besonders flach ausgestaltet sein, indem es beispielsweise mehrere ineinander teleskopierbare, ringförmige Abschnitte aufweist, oder indem es aus einem flexiblen Material ähnlich wie ein Beutel ausgestaltet ist. In beiden Fällen kann ein solches Spülbecken so flach zusammengelegt werden, dass es bündig in die umgebende Küchenarbeitsplatte eingepasst werden kann, um eine Transportstellung auf dem Autodach einzunehmen. Demgegenüber kann es aus der Küchenarbeitsplatte nach unten heraus verlängert werden, um eine Campingstellung oder Gebrauchsstellung einzunehmen.

Die erwähnte Küchenarbeitsplatte kann dabei vorteilhaft mittels eines solchen Gelenkbeschlags beweglich sein, dass sie aus einer horizontalen Fahr- oder Transportstellung auf dem Autodach in eine ebenfalls horizontale Camping- oder Gebrauchsstellung neben dem Fahrzeug bewegt werden kann. Je nach Ausgestaltung des Gelenkbeschlags kann die Ausrichtung der Küchenarbeitsplatte in beiden Stellungen gleich sein, so dass in beiden Stellungen dieselbe Seite der Küchenarbeitsplatte nach oben weist. Alternativ kann der Gelenkbeschlag so ausgestaltet sein, dass die Küchenarbeitsplatte um 180° geschwenkt wird. Auf diese Weise ist sichergestellt, dass die zum Arbeiten benutzbare Seite der Küchenarbeitsplatte, die in der Camping- oder Gebrauchsstellung nach oben weist, in der Fahr- oder Transportstellung nach unten weist und vor Verschmutzungen oder Beschädigungen während der Fahrt geschützt ist.

Ein Ausführungsbeispiel eines Camping-Versorgungsmoduls wird anhand der rein schematischen Darstellungen nachfolgend näher erläutert. Dabei zeigt
- Fig. 1: eine Ansicht von vorn auf ein Fahrzeug, mit Camping-Versorgungsmodul, wobei das Versorgungsmodul eine Fahr- oder Transportstellung einnimmt,
- Fig. 2: eine Ansicht ähnlich Fig. 1, wobei jedoch das Versorgungsmodul eine Camping- oder Gebrauchsstellung einnimmt.

In den Zeichnungen ist jeweils ein Fahrzeug 7 dargestellt, auf dessen Fahrzeugdach ein Versorgungsmodul 8 angeordnet ist, das als Camping-Versorgungsmodul ausgestaltet ist.

Das Versorgungsmodul 8 ist als Camping-Versorgungsmodul ausgestaltet und weist erstens eine Basis 5 auf, die Basis 5 mit schematisch angedeuteten Stützen 6 auf dem Dach eines Kraftfahrzeugs befestigt ist. Zweitens weist das Versorgungsmodul 8 ein Traggestell 4 auf, welches an der Basis 5 beweglich gelagert ist. Bei dem dargestellten Ausführungsbeispiel ist diese Beweglichkeit durch eine Scharnieranordnung ermöglicht, so dass das Traggestell 4 um eine Schwenkachse 9 relativ zur Basis 5 schwenkbar ist. Außerdem weist das Versorgungsmodul 8 einen Wassertank 10 auf, der bei dem dargestellten Ausführungsbeispiel zugunsten eines möglichst tiefen Schwerpunkts zwischen den Stützen 6 angeordnet ist und auf dem Fahrzeugdach aufliegt.

Das Versorgungsmodul 8 trägt ein Funktionselement, welches eine Kochstelle und eine Spüle 1 aufweist, die gemeinsam an dem Traggestell 4 gehalten und mit diesem beweglich sind. Bei dem dargestellten Ausführungsbeispiel ist die Kochstelle hinter der Spüle 1 angeordnet und daher in den Zeichnungen durch die Spüle 1 verdeckt.

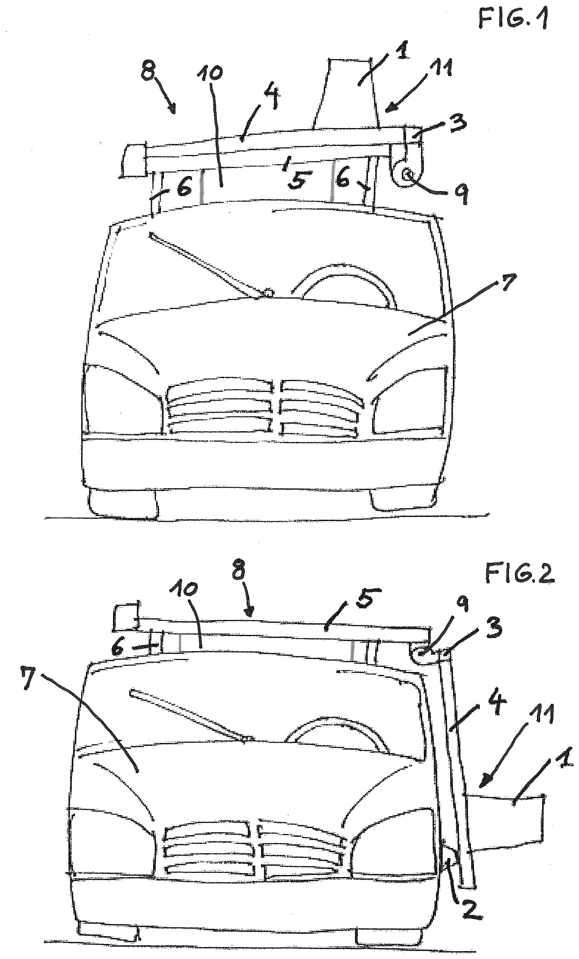

In Fig. 1 befindet sich das Traggestell 4 und das gesamte Versorgungsmodul 8 in einer Fahr- oder Transportstellung, so dass das Fahrzeug fahrbereit ist. Um Verschmutzungen des Versorgungsmoduls 8 durch den Fahrbetrieb zu vermeiden, kann eine Abdeckung vorgesehen sein, beispielsweise in Form eine festen Haube, insbesondere jedoch in Form einer Plane, die über das Versorgungsmodul 8 gezogen werden kann.

Wenn das Fahrzeug 7 den gewünschten Standort erreicht hat, kann das Traggestell 4 mittels eines Gelenks 3 aus seiner in Fig. 1 dargestellten Fahr- oder Transportstellung um die Schwenkachse 9 in eine Camping- oder Gebrauchsstellung geschwenkt werden, die in Fig. 2 dargestellt ist und in welcher sich das Traggestell 4 seitlich neben dem Fahrzeug befindet. In seiner Gebrauchsstellung erstreckt sich das Funktionselement 11 nicht nur seitlich über die Grundfläche der Basis 5 hinaus, sondern ist auch tiefer als die Basis 5 angeordnet, so dass die Kochstelle und die Spüle 1 bequem zugänglich sind.

Schäden an der Fahrzeugkarosserie werden durch einen Puffer 2 verhindert, der fest am Camping-Versorgungsmodul, insbesondere am Traggestell 4, oder fest am Fahrzeug vorgesehen sein kann. Bei dem dargestellten Ausführungsbeispiel ist vorgesehen, dass der Puffer 2 als separates Element ausgestaltet ist, welches vor Verschmutzungen geschützt im Fahrzeug während der Fahrt mitgeführt werden kann und am Fahrzeug oder am Traggestell 4 montiert wird, bevor das Traggestell 4 seine Camping- oder Gebrauchsstellung einnimmt.

Aus Übersichtlichkeitsgründen sind in den Zeichnungen einige Elemente des Versorgungsmoduls 8 nicht dargestellt, die aus der Praxis ohnehin bekannt sind und daher nicht näher erläutert zu werden brauchen. Derartige nicht dargestellte Elemente sind z. B. Dosier- und Füllanschlüsse des Wassertanks 10, die zur dosierbaren Abgabe des Wassers aus dem Wassertank - z. B. mittels eines Wasserhahns an der Spüle 1 - und zum Befüllen des Wassertanks - z. B. mittels eines Verschlussdeckels am Wassertank 10- dienen. Auch die erwähnte Kochstelle ist nicht dargestellt, ebenso Schlauchleitungen, die vom Wassertank 10 zur Spüle 1 oder von einer Gasflasche zu der Kochstelle führen.

### Bezugszeichen:

- 1: Spüle
- 2: Puffer
- 3: Scharnier
- 4: Traggestell
- 5: Basis
- 6: Stütze
- 7: Fahrzeug
- 8: Camping-Versorgungsmodul
- 9: Schwenkachse
- 10: Wassertank
- 11: Funktionselement

## Patentansprüche

1. Camping-Versorgungsmodul (8),
• mit einer Basis (5),
welche die Befestigung des Versorgungsmoduls (8) auf einem Dachgepäckträger eines Automobils ermöglichend ausgestaltete Befestigungsmittel aufweist,
• mit einem Wassertank (10),
welcher einen Dosierverschluss zur dosierbaren Abgabe des Wassers aus dem Wassertank (10) aufweist, und welcher einen Füllanschluss zum Befüllen des Wassertanks (10) aufweist,
• und mit einem Funktionselement (11),
welches eine Kochstelle aufweist,
und welches an der Basis (5) beweglich gehalten ist, derart, dass das Funktionselement (11) zwischen einer ersten Transportstellung und einer zweiten, vergleichsweise tiefer angeordneten Gebrauchsstellung schwenkbeweglich ist,
wobei das Funktionselement (11) in seiner Transportstellung oberhalb von der Basis (5) angeordnet ist und in seiner Gebrauchsstellung sich zumindest teilweise über die Grundfläche der Basis (5) hinaus erstreckt.

2. Versorgungsmodul nach Anspruch 1,
**dadurch gekennzeichnet,**
**dass** das Funktionselement (11) eine Spüle (1) aufweist.

3. Versorgungsmodul nach Anspruch 1 oder 2,
**dadurch gekennzeichnet,**
**dass** das Funktionselement (11) eine Halterung für eine Gaskartusche aufweist.

4. Versorgungsmodul nach Anspruch 3,
**dadurch gekennzeichnet,**
**dass** die Halterung von der Kochstelle getrennt ist, derart,
**dass** die Gaskartusche nur im von der Kochstelle getrennten Zustand in der Halterung aufnehmbar ist.

5. Versorgungsmodul nach einem der vorhergehenden Ansprüche,
**dadurch gekennzeichnet,**
**dass** der Dosierverschluss an einem Schlauch angeordnet ist, welcher an den Wassertank (10) anschließt.

6. Versorgungsmodul nach einem der vorhergehenden Ansprüche,
**dadurch gekennzeichnet,**
**dass** der Wassertank (10) unbeweglich mit der Basis (5) verbunden ist.

7. Versorgungsmodul nach einem der Ansprüche 1 bis 5,
**dadurch gekennzeichnet,**
**dass** der Wassertank (10) wie das Funktionselement (11) ebenfalls beweglich mit der Basis (5) verbunden ist, wobei der Wassertank (10) aus einer oberen Gebrauchsstellung in eine demgegenüber tiefere Befüllstellung höhenbeweglich ist.

8. Versorgungsmodul nach Anspruch 7,
**dadurch gekennzeichnet,**
**dass** der Wassertank (10) unabhängig von dem Funktionselement (11) beweglich an der Basis (5) gehalten ist.

9. Versorgungsmodul nach Anspruch 7 oder 8,
**dadurch gekennzeichnet,**
**dass** der Wassertank (10) gegen die Wirkung einer Rückstellkraft in seine Befüllstellung beweglich ist und, durch die Rückstellkraft unterstützt, in seine Gebrauchsstellung zurück beweglich ist.

10. Versorgungsmodul nach einem der Ansprüche 7 bis 9,
**dadurch gekennzeichnet,**
**dass** der Wassertank (10) motorisch angetrieben beweglich ist.

11. Versorgungsmodul nach einem der vorhergehenden Ansprüche,
**dadurch gekennzeichnet,**
**dass** der Wassertank (10) eine Wärmestrahlen absorbierende Beschichtung aufweist.

12. Versorgungsmodul nach einem der vorhergehenden Ansprüche,
**dadurch gekennzeichnet,**
**dass** das Funktionselement (11) und / oder der Wassertank (10) über einen Parallelogrammbeschlag beweglich mit der Basis (5) verbunden ist,
derart, dass dieses bewegliche Bauteil während der Bewegung seine Ausrichtung im Wesentlichen beibehält.

13. Versorgungsmodul nach einem der vorhergehenden Ansprüche,
**dadurch gekennzeichnet,**
**dass** das Funktionselement (11) und / oder der Wassertank (10) schwenkbeweglich mit der Basis (5) verbunden ist.

14. Versorgungsmodul nach einem der vorhergehenden Ansprüche,
**dadurch gekennzeichnet,**
**dass** das Funktionselement (11) und / oder der Wassertank (10) mittels eines Gelenkbeschlags mit der Basis (5) verbunden ist,
wobei die Gelenkbeweglichkeit in einer Endlage des Gelenkbeschlags, in welcher das Funktionselement (11) und / oder der Wassertank (10) seine abgesenkte Stellung einnimmt, begrenzt ist.
